# EUROPÄISCHE PATENTSCHRIFT

(11) **EP 4 278 883 B1**
(45) Veröffentlichungstag und Bekanntmachung des Hinweises auf die Patenterteilung: **04.02.2026**
(21) Anmeldenummer: 23173697.6
(22) Anmeldetag: 16.05.2023
(51) Int. Cl.: A01D 34/135, A01D 34/17

(54) **SCHNEIDWERK MIT DOPPELMESSERSYSTEM UND BEWEGLICHER GLEITFLÄCHE**
CUTTING ASSEMBLY WITH DOUBLE BLADE SYSTEM AND MOVABLE SLIDING SURFACE
BARRE DE COUPE DOTÉE D'UN SYSTÈME À DOUBLE COUTEAU ET D'UNE SURFACE DE GLISSEMENT MOBILE

(30) Priorität: 20.05.2022 DE 102022112817
(43) Veröffentlichungstag der Anmeldung: 22.11.2023
(73) Patentinhaber: Carl Geringhoff GmbH & Co. Kommanditgesellschaft, 59227 Ahlen (DE)
(72) Erfinder: Brox, Christian, 59387 Ascheberg (DE); Webermann, Dirk, 48308 Senden (DE); Sudhues, Steffen, 59227 Ahlen (DE); Pokriefke, Michael, 27798 Hude (DE)
(74) Vertreter: Weeg, Thomas

(56) Entgegenhaltungen:
- EP-A1- 3 881 664
- EP-B1- 3 637 978
- DE-A1- 10 246 558
- DE-B4- 102007 007 985
- US-B2- 10 820 496

## Beschreibung

Die vorliegende Erfindung bezieht sich auf ein Schneidwerk zum Anbau an einen Mähdrescher mit einem Rahmen, einem Messerbalken, an dem ein Schnittsystem angeordnet ist, einer Ablagefläche zur Ablage des geschnittenen Halmguts, Fördervorrichtungen zum Abfördern des geschnittenen Halmguts, Antriebsvorrichtungen zum Antrieb des Schnittsystems mit einem Getriebe, das an einer Stelle zwischen den Seitenwänden des Schneidwerks angeordnet ist, wobei das Getriebe die Antriebskraft über Abtriebswellen, die auf der Oberseite des Getriebes aus dem Getriebegehäuse nach außen geführt sind, auf drehfest mit den Abtriebswellen verbundene Schwinghebel überträgt, die mit Hubstangen antriebsverbunden sind, die als Teil des Schnittsystems über die Schwinghebel in oszillierenden Bewegungen angetrieben sind.

Ein gattungsgemäßes Schneidwerk ist aus der Schrift DE 10 2015 116 890 A1 bekannt. Dort ist ein Draper-Schneidwerk offenbart, dessen Ablagefläche auf der jeweils nach oben weisenden Seite mehrerer umlaufend angetriebenen Bandförderer ausgebildet ist.

Das Schneidwerk ist mit einem Messerbalken versehen, an dem feststehende, am Messerbalken montierte Messerklingen mit Messerklingen interagieren, die an einer quer zu Arbeitsrichtung des Schneidwerks angeordneten Hubstange angebracht sind, die in Erstreckungsrichtung oszillierend beweglich angetrieben ist. Es handelt sich um ein einfaches Schnittsystem. Das Getriebe, mit dem die Hubstangen angetrieben sind, ist zumindest annähernd mittig zur Arbeitsbreite des Schneidwerks platziert. Die Abtriebswellen, die auf der Oberseite des Getriebes aus dem Getriebegehäuse nach außen geführt sind, übertragen die Antriebskraft auf drehfest mit den jeweiligen Abtriebswellen verbundene Schwinghebel, die jeweils eine Hubstange oszillierend antreiben. Die Hubstangen erstrecken sich aber nujeweils über eine Hälfte der Arbeitsbreite des Schneidwerks. Ein weiteres Beispiel für ein Schneidwerk mit einem geteilten Messerbalken und gegensinnig zueinander angetrieben Messern ist aus der Schrift US 10,820,496 B2 bekannt. Auch hier wirken an den Messerbalken befestigte Einzelmesser mit feststehenden Messerfingern zusammen, um das Erntegut zu schneiden.

Es hat sich herausgestellt, dass an dem gattungsgemäßen Schneidwerk in schwierigen Erntebedingungen Körnerverluste auftreten. Durch die Berührung der Halme und/oder Fruchtstände des Ernteguts mit Teilen des Schneidwerks, wie beispielsweise Halmteilern, dem Messerbalken, der Haspel oder anderen Bauteilen, kann es bei sehr reifen und trockenen Halmfrüchten passieren, dass sich Körner von den Fruchtständen des Halmguts unmittelbar lösen und zu Boden fallen, bevor sie von der Ablagefläche aufgefangen werden. Solche am Boden liegenden Körner können nicht mehr in den Erntegutstrom zurückgeholt werden und sind als Ernteertrag verloren. Bei höheren Fahrgeschwindigkeiten der Erntemaschine, an die das Schneidwerk bei der Ernte angebaut ist, sowie in stark verunkrauteten Beständen kann es dazu kommen, dass die Stängel des Ernteguts nicht perfekt abgeschnitten werden, weil die Hubwege der Hubstangen, an denen die bewegten Messerklingen befestigt sind, im Verhältnis zur Fahrgeschwindigkeit zu lang sind, um perfekt schneiden zu können, und/oder das zwischen der bewegten und der feststehenden Messerklinge befindliche Materialpaket zu dick ist, um dieses sauber abschneiden zu können. Auch hier kommt es dann zu Körnerverlusten.

Aus den Schriften DE 10 2018 119 326 B3, DE 102 46 558 A1, EP 3 881 664 A1, EP 3 637 978 B1 und DE 10 2007 007 985 B4 sind Doppelmesser-Schnittsysteme bekannt, bei denen nicht nur eine Hubstange mit den daran befestigten Messerklingen, sondern zwei Hubstangen, die mit den daran befestigten Messerklingen ein Ober- und ein Untermesser bilden, eingesetzt werden. Die Ober- und Untermesser sind jeweils gegenläufig beweglich angetrieben.

Es ist die Aufgabe der vorliegenden Erfindung, die Körnerverluste des Schneidwerks zu verringern und die Schnitt- und Bergungsleistung des Schneidwerks auch in besonders schwierigen Erntebedingungen zu verbessern.

Die Aufgabe wird für ein gattungsgemäßes Schneidwerk gelöst, indem am Messerbalken als Schnittsystem ein Doppelmesser-Schnittsystem ausgebildet ist, bei dem ein erster Teil der am Schneidwerk vorhandenen Messerklingen an einem ersten Messerrücken befestigt sind, wobei dieser erste Teil der Messerklingen zusammen mit dem ersten Messerrücken das Obermesser bilden, ein zweiter Teil der am Schneidwerk vorhandenen Messerklingen an einem zweiten Messerrücken befestigt sind, wobei dieser zweite Teil der Messerklingen zusammen mit dem zweiten Messerrücken das Untermesser bilden, das Obermesser und das Untermesser gegenläufig angetrieben sind und von den Schwinghebeln ein erster Schwinghebel mit dem Obermesser und ein zweiter Schwinghebel mit dem Untermesser antriebsverbunden sind.

Bei der Verwendung eines Doppelmesser-Schnittsystems kann auf Ährenheber und Messerfinger, in denen die Hubstange und die daran befestigten Messerklingen geführt sind, verzichtet werden. Da bei einem Doppelmesser-Schnittsystem sowohl das Ober- als auch das Untermesser oszillierend beweglich angetrieben sind, verkürzen sich deren Hubwege, die Bewegungsgeschwindigkeiten können trotz einer erhöhten Schnittfrequenz niedriger gewählt werden. Wenn die Bewegungsgeschwindigkeit des Ober- und Untermessers bei halbem Hubweg größer als halb so schnell wie die herkömmlichen Schnittsysteme mit einer oszillierenden Hubstange ist, kann bei der Ernte mit einem mit Doppelmesser-Schnittsystem ausgestatteten Schneidwerk schneller gefahren werden als mit einem herkömmlichen Schneidwerk, ohne Schnittverluste befürchten zu müssen, wodurch die Ablagefläche nochmals schneller unter die fallenden Körner geschoben wird, wodurch sich die Verluste am Schneidwerk nochmals verringern. Daraus resultiert eine größere Laufruhe des Schnittsystems, wodurch beim Schnitt des Ernteguts weniger Körner aus den Ähren herausgeschüttelt werden. Zudem ist der Schnitt selbst sauberer und glatter, wodurch die Stängel des Ernteguts ebenfalls weniger bewegt werden.

Die Messerklingen eines Doppelmesser-Schnittsystems können auch tiefer am Schneidwerk montiert werden als die Messerklingen eines herkömmlichen Schnittsystems mit einer einfachen Hubstange, weil beim Doppelmesser-Schnittsystem keine Ährenheber und Messerfinger erforderlich sind. Das Schneidwerk selbst kann dichter am Boden gefahren werden, weil sich die Messerklingen eines Doppelmesser-Schnittsystems selbst reinigen und nicht mit Erde zustopfen, wenn sie einen Bodenkontakt gehabt haben. Daraus resultiert ein längerer Fallweg von losen Körnern, der dazu führen kann, dass die losen Körner schon auf der sich bei der Vorfahrt der Erntemaschine kontinuierlich unter das geschnittene Erntegut schiebenden Ablagefläche und nicht noch auf dem Ackerboden landen, bevor die Ablagefläche die Falllinie des fallenden Korns erreicht.

Üblicherweise werden Messerbalken eines Schneidwerks von außen über im Bereich der Seitenwände angeordnete Getriebe angetrieben. Bei dem zumindest annähernd mittig im Schneidwerk angeordneten Getriebe wird nun einer der Schwinghebel mit dem Obermesser und der andere Schwinghebel mit dem Untermesser antriebsverbunden. Das für ein Einzelmesser-Schnittsystem mit geteilten Hubstangen bekannte Getriebe kann durch die Anbindung jeweils des Ober- und Untermesser an einen der Schwinghebel nun auch in Verbindung mit einem Doppelmesser-Schnittsystem eingesetzt werden. Dabei sind die Ober- und Untermesser über die Arbeitsbreite des Schneidwerks oder der Arbeitsbreite eines Schneidwerksteils, in dem ein Getriebe für den Antrieb des Doppelmesser-Schnittsystems verwendet ist, ungeteilt und erstrecken sich über diese Arbeitsbreite. Bei einem Mittenantrieb der Ober- und Untermesser des Doppelmesser-Schnittsystems ergibt sich eine gleichmäßigere Kraftverteilung der Antriebskraft über die Arbeitsbreite der Ober- und Untermesser im Schneidwerk. Die Antriebswellen und/oder Hydraulikschläuche, mit denen die Antriebskraft von einer erntemaschinenseitigen Antriebsquelle durch das Schneidwerk hindurch zum Getriebe geleitet wird, können nun auch bei einem Doppelmesser-Schnittsystem näher zur Schneidwerksmitte hin im Schneidwerk angeordnet werden. Wenn diese zu den äußeren Schneidwerksseiten geführt werden müssten, wäre der Rahmen mit entsprechend höheren Gewichten und Hebelkräften belastet. Das wird durch die stärker zentrierte Anordnung des Getriebes vermieden.

Das Getriebe muss dabei nicht geometrisch genau mittig im Schneidwerk angeordnet sein, ein seitlicher Versatz zur Mitte ist möglich. Es können auch mehrere Getriebe vorgesehen sein, die jeweils einen Satz von Ober- und Untermessern antreiben, die sich nur über eine Teilarbeitsbreite des Schneidwerks hinweg erstecken. So können beispielsweise für ein 12 m breites Schneidwerk zwei Getriebe vorhanden sein, die jeweils einen Satz von 6 m breiten Ober- und Untermessern antreiben, wobei die Getriebe beispielsweise an einer von den Seitenwänden um 3 m oder 4 m nach innen versetzten Position angeordnet sind. Möglich ist auch der Antrieb der Doppelmesser in einem 12 m breiten Schneidwerk, das drei schwenkbar miteinander verbundene Teile aufweist, in jeden 4 m breiten Schneidwerksteil durch jeweils ein zumindest annähernd mittig in diesem Schneidwerksteil platzierten Getriebe, das die Doppelmesser in dem zugehörigen Schneidwerksteil antreibt.

Die Erfindung ist sowohl bei Draper-Schneidwerken als auch anderen Schneidwerken mit einer starren Ablagefläche und darüberstreichenden Fördervorrichtungen, wie beispielsweise einer Förderschnecke, umsetzbar. Als Fördervorrichtung kann am Schneidwerk zusätzlich eine rotierend angetriebene und höhen- und längenmäßig verstellbare Haspel vorgesehen sein, die oberhalb und über dem Messerbalken positioniert ist und mit der das geschnittene Erntegut in Richtung der Ablagefläche abgeworfen wird. Die Haspel stabilisiert und beruhigt das Erntegut in dessen oberem Bereich, wenn es geschnitten wird, und schubst das geschnittene Erntegut in die Richtung der Ablagefläche, wenn der Schnitt erfolgt ist und das Erntegut in diesem Moment auf den Ackerboden zu fallen droht.

Nach einer Ausgestaltung der Erfindung erstrecken sich die Schwinghebel in einer Ebene oberhalb der Ebene der Ober- und Untermesser von den Abtriebswellen in die Richtung der Ober- und Untermesser. Durch die Anordnung des Antriebsstrangs vom Getriebe zu den Ober- und Untermessern oberhalb der Ebene der Ober- und Untermesser können die Ober- und Untermesser sehr tief unten am Messerbalken in das Schneidwerk eingebaut werden, das Schneidwerk selbst bleibt unterhalb der Ebene der Ober- und Untermesser sehr flach bauend, so dass die Ober- und Untermesser im Erntebetrieb sehr dicht an der Bodenoberfläche geführt werden können, die Ober- und Untermesser sind in dieser Einbaulage einer geringeren Gefahr von Beschädigungen ausgesetzt, weil dort das Kollisionsrisiko mit Hindernissen vermindert ist, und der Gutfluss wird durch diese Einbaulage kaum behindert, weil die Schwinghebel sehr kompakt bauen.

Nach einer Ausgestaltung der Erfindung weist der Antriebsstrang von der Abtriebswelle zum Untermesser einen Abschnitt auf, in dem der Schwinghebel das Obermesser bereichsweise umgreift. Dieser Abschnitt stützt das Obermesser nach hinten hin in einer Richtung entgegen der Arbeitsrichtung ab und hält dabei das Ober- und Untermesser aufeinander. Das Untermesser kann dabei mit dem unteren Teil des umgreifenden Abschnitts fest verbunden sein, so dass sich beim Betrieb des Schneidwerks das Untermesser gleichsinnig mit dem umgreifenden Abschnitt bewegt, das Obermesser aber zumindest zeitweise gegensinnig. Der Abschnitt kann leistenförmig ausgebildet sein, so dass sich die Abstütz- und Anpresswirkung nicht nur punktuell, sondern über die Länge des umgreifenden Abschnitts einstellt.

Nach einer Ausgestaltung der Erfindung sind das Obermesser und das Untermesser an Schwinghebeln gehalten, die zwischen ihrer schneidwerksseitigen Drehachse und der Drehachse, über die sie mit dem Obermesser oder dem Untermesser verbunden sind, dieselbe Länge aufweisen wie die Schwinghebel, über die das Obermesser und das Untermesser mit dem Getriebe verbunden sind. Durch die gleiche Länge der Schwinghebel, die für den Antrieb der Ober- und Untermesser und für deren Halterung verwendet sind, und dadurch bedingt den gleichen Radius, mit dem die Schwinghebel um ihre Drehachse drehen, bewegen sich die Ober- und Untermesser sehr laufruhig. Es werden auch Biegekräfte in den Ober- und Untermessern vermieden, die auftreten können, wenn Schwinghebel mit einer unterschiedlichen Länge verwendet werden.

Nach einer Ausgestaltung der Erfindung sind das Obermesser haltende und das Untermesser haltende Schwinghebel mit ihren jeweils schneidwerksseitigen Drehachsen konzentrisch zueinander auf einer Lagerstelle angeordnet. Jeweils ein Schwinghebel für das Obermesser und ein Schwinghebel für das Untermesser bilden ein Paar von Schwinghebeln, die konzentrisch zueinander angeordnet sind. Es können mehrere Paare von Schwinghebeln oder alle Paare von Schwinghebeln über die Schneidwerksbreite verteilt mit konzentrisch zueinander angeordneten Drehachsen versehen sein. Die auf die Ober- und Untermesser einwirkenden Haltekräfte unterscheiden sich dadurch nicht. An jeder Position, an der die Ober- und Untermesser mit dem Schneidwerk verbunden sind, genügt eine Lagerstelle für die Lagerung beider Schwinghebel, wodurch sich der Bauaufwand verringert. Nach einem Baukastensystem können identische Schwinghebel zur Halterung der Ober- und Untermesser verwendet werden.

Nach einer Ausgestaltung der Erfindung weisen die Schwinghebel an ihren rahmen- und/oder messerseitigen Ende ein Rückstellkräfte aufbauendes Pufferelement auf. Das Pufferelement kann beispielsweise ein Formteil aus einem elastomeren Material wie einem Natur- oder Synthesekautschuk sein, das insbesondere in den Endlagen des zugehörigen Schwinghebels Kraftspitzen aufnimmt und die dabei aufgebauten Rückstellkräfte wieder abgibt, wenn sich der Schwinghebel wieder in die entgegengesetzte Richtung bewegt. Das Doppelmesser-Schnittsystem ist dadurch laufruhiger und langlebiger, und das Risiko von Beschädigungen durch Fremdkörper, die sich zwischen den Messerklingen einklemmen, ist geringer, weil Kraftspitzen von den Pufferelementen aufgenommen werden. Anstelle eine Pufferelements aus einem elastomeren Material können auch metallische Federn als Pufferelement verwendet werden.

Nach einer Ausgestaltung der Erfindung sind die Messerklingen mit einer unterschiedlichen Klingenteilung am Ober- und Untermesser angeordnet. Durch die unterschiedlichen Abstände der an den Ober- und Untermessern angeordneten Klingen verteilen sich die durch einen jeweiligen Schnitt an einer Schnittstelle zwischen den Messerklingen auftretenden Kraftspitzen über eine Umdrehung des Getriebes auf mehrere Winkelgrade einer Umdrehung verteilt, so dass sich nicht eine größere Zahl oder alle von Schnitten an Messerpaarungen auftretenden Kraftspitzen an einem Winkelgrad aufsummieren. Der Antriebsstrang wird dadurch geschont, er kann auf geringere Kräfte ausgelegt werden und er kann laufruhiger betrieben werden.

Nach einer Ausgestaltung der Erfindung weist das Schneidwerk eine schräg in Förderrichtung des Ernteguts geneigte Gleitfläche im Übergangsbereich vom Messerbalken zur Ablagefläche auf, wobei die Gleitfläche als Leiste ausgebildet ist, die ortsfest mit dem Obermesser verbunden ist. Die als Leiste ausgebildete Gleitfläche bewegt sich mit den oszillierenden Bewegungen des Obermessers mit, wenn sie ortsfest mit dem Obermesser verbunden ist. Die Leiste und damit auch die Gleitfläche führt bei der Erntearbeit zusammen mit dem Obermesser eine Schüttelbewegung aus, durch die Erntegut, das auf die Gleitfläche fällt, bei dem Kontakt ebenfalls einen Bewegungsimpuls in die jeweilige Bewegungsrichtung des Obermessers mitbekommt. Da sich das Obermesser sehr schnell bewegt und dabei auch ständig an den Hublagenenden die Bewegungsgeschwindigkeit verringert und wieder beschleunigt und dabei auch immer die Bewegungsrichtung wechselt, vibriert das herabfallende Erntegut auf der Gleitfläche und haftet nicht daran an. Da herabfallendes Erntegut auf diese Weise beabstandet zur Gleitfläche in der Schwebe gehalten wird, kann es dort leichter von weiterem geschnittenem und an der Gleitfläche vorbeistreifendem Erntegut mitgenommen und auf die Ablagefläche befördert werden. Die mit dem Obermesser mitbewegte Gleitfläche verringert dadurch ebenfalls die Körnerverluste des Schneidwerks im Bereich des Schnittsystems. Die Leiste kann sich einstückig über die gesamte Arbeitsbreite des Schneidwerks erstrecken, die Leiste kann aber auch in mehrere Teile unterteilt sein, die aneinandergereiht auf das Obermesser aufgesetzt sind. Auch das Obermesser kann in Teile segmentiert sein, wobei es möglich ist, die Segmente des Obermessers und der Leistenteile gleich breit auszugestalten. Die Leiste kann zum Obermesser und zum Messerbalken, der Ablagefläche und/oder zu benachbarten Leistenteilen bei einer segmentierten Leiste hin besonders abgedichtet sein, beispielsweise durch eine Dichtungslage aus einem elastomeren Material, um den Durchtritt von Erntegut durch die dann abgedichteten Schlitze und Fugen zu vermindern oder ganz zu unterbinden. Die mit der Erntemaschine kontinuierlich in den zu erntenden Bestand des Ernteguts vorwärts bewegte Gleitfläche schubst die unteren Teile der geschnittenen Pflanzen in die Arbeitsrichtung der Erntemaschine, während die Haspel bei optimaler Einstellung die oberen Bereiche des Ernteguts in Richtung der Ablagefläche befördert, so dass sich das Erntegut in einer Kippbewegung auf die Ablagefläche zu neigt und ohne Schnittverluste auf der Ablagefläche zu liegen kommt. Durch die Vibration der Gleitfläche haftet das Erntegut nicht daran an, so dass der Förderimpuls der Haspel auf das geschnittene Erntegut in Richtung der Ablagefläche nicht von der Gleitfläche abgebremst wird.

**In** der Kombination eines Doppelmesser-Schnittsystems mit einer ortsfest mit dem Obermesser verbundenen Gleitfläche ist es möglich, die Körnerverluste im Schnittbereich des Schneidwerks insbesondere unter schwierigen Erntebedingungen zu verringern. Das geschnittene Erntegut haftet weniger an der Gleitfläche an, fließt leichter in Richtung der Ablagefläche und wird insgesamt besser in Richtung der Ablagefläche des Schneidwerks abgefördert.

Nach einer Ausgestaltung der Erfindung weist die Leiste quer über die Arbeitsbreite verteilt eine Anzahl von Luftaustrittsöffnungen auf, die nach oben und/oder in Richtung der Ablagefläche ausgerichtet sind. Durch die Luftaustrittsöffnungen kann ein Luftstrom austreten, der das geschnittene oder aus den Ähren herausgeschüttelte Erntegut erfasst und in Richtung der Ablagefläche befördert. Das Verlustniveau des Schneidwerks kann durch die Luftaustrittsöffnungen verringert werden.

Nach einer Ausgestaltung der Erfindung sind in der Leiste in den Bereichen, in denen sich Schwinghebel befinden, jeweils Abdeckungen ausgeformt, die die Schwinghebel gegen Erntegut und Schmutz abschirmen. Die Gelenke der Schwinghebel sind dadurch weniger verschleißbehaftet.

Nach einer Ausgestaltung der Erfindung ist das Schneidwerk mehrteilig und die Leiste an den Nahtstellen zwischen den Schneidwerksteilen flexibel und/oder geteilt ausgebildet. Bei einem mehrteiligen Schneidwerk ist der Rahmen nicht einteilig und starr ausgebildet, sondern er verfügt über mehrere Rahmenteile, die relativ beweglich zueinander ausgebildet sind und mit ihrer Baubreite jeweils nur eine Teilbreite der Gesamtarbeitsbreite des Schneidwerks abdecken. Die einzelnen Rahmenteile können sich auf diese Weise besser einer Bodenkontur anpassen. Wenn die Leiste zumindest an den Nahtstellen flexibel und/oder geteilt ausgebildet ist, behindert sie die Anpassungsbewegungen der einzelnen Rahmenteile an eine wechselnde Bodenkontur nicht, kann aber gleichwohl auch an den Nahtstellen eine vollständige und sichere Übergabe des Ernteguts auf die Ablagefläche unterstützen, ohne dass dadurch das Risiko von Körnerverlusten im Übergangsbereich zwischen dem Messerbalken und der Ablagefläche signifikant erhöht wäre.

Nach einer Ausgestaltung der Erfindung sind die Ober- und Untermesser über ihre Länge in Erstreckungsrichtung hinweg an den freien Enden von mehreren mit dem Rahmen verbundenen Haltearmen gehalten, die mit ihren freien Enden in voneinander unterschiedliche Höhenlagen beweglich sind. Bei dieser Befestigungsweise kann sich das Schnittsystem quer über die Arbeitsbreite des Schneidwerks flexibel zumindest näherungsweise an eine unebene Bodenkontur anpassen, indem sich die freien Enden der Haltearme je nach Oberflächenkontur des soeben überfahrenen Ackerbodens im Bereich des entsprechenden Haltearms nach oben oder unten bewegen
oder bei einer ebenen Bodenfläche in ihrer aktuellen Position verbleiben. Die Haltearme können beispielsweise an ihrem rahmenseitigen Ende in einem Drehlager gelagert sein, oder die Haltearme sind als am Rahmen festgelegte Blattfedern ausgebildet, was entsprechende Federbewegungen am freien Ende der Blattfeder ermöglicht. Bei Bewegungen der freien Enden der Haltearme bewegt sich der von einem entsprechenden Haltearm gehaltene Abschnitt der Ober- und Untermesser sowie die mit dem Obermesser fest verbundene Leiste mit der Gleitfläche mit nach oben oder unten. Bei Lagergetreide oder anderem bodennah zu schneidendem Erntegut kann dieses dadurch gut unterschnitten und bodennah abgeschnitten werden, auch wenn sich bereichsweise Bodenabsenkungen oder -erhebungen innerhalb der Arbeitsbreite des Schneidwerks befinden. Da sich die Leiste zusammen mit dem Obermesser bewegt, folgt auch die Gleitfläche den Bewegungen, mit denen sich die Ober- und Untermesser einer unebenen Bodenkontur anpassen, wenn das Schneidwerk beim Ernten über den Ackerboden bewegt wird. Insbesondere die Messerrücken der Ober- und Untermesser sind dabei ebenfalls ausreichend flexibel ausgestaltet, so dass sie sich entsprechend der Bodenkontur anpassen können.

Nach einer Ausgestaltung der Erfindung ist die Ablagefläche auf der nach oben weisenden Seite eines oder mehrerer umlaufend angetriebenen Bandförderer ausgebildet. Bei einer solchen Ausgestaltung des Schneidwerks ist dieses insbesondere ein Draper-Schneidwerk, das über die gesamte Fläche der Oberseiten der Bandförderer förderaktiv ist. Da die umlaufenden Bänder der Bandförderer in einem oberen und einem unteren Trum um seitliche Umlenkrollen umlaufen und aus diesem Grund eine unvermeidbar höher aufragende Bauhöhe aufweisen als beispielsweise eine aus Blech geformte Schneidwerksmulde, ist es bei solchen Draper-Schneidwerken besonders hilfreich, einen Höhenversatz zwischen dem Schnittsystem und der Oberfläche des oberen Trums des Bandförderers mit einer Gleitfläche zu überwinden, die so ausgestaltet ist, dass sie möglichst geringe Körnerverluste verursacht.

Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf ein Schneidwerk aus einer Ansicht von schräg vorne,
- Fig. 2:: eine vergrößerte Ausschnittansicht auf das Doppelmesser-Schnittsystem,
- Fig. 3:: die an den freien Enden von mehreren mit dem Rahmen verbundenen Haltearmen gehaltenen Ober- und Untermesser,
- Fig. 4:: eine vergrößerte Ansicht auf den Bereich des Messerbalkens, in dem ein Getriebe angeordnet ist, und
- Fig. 5:: eine Schnittansicht durch den Bereich des Messerbalkens.

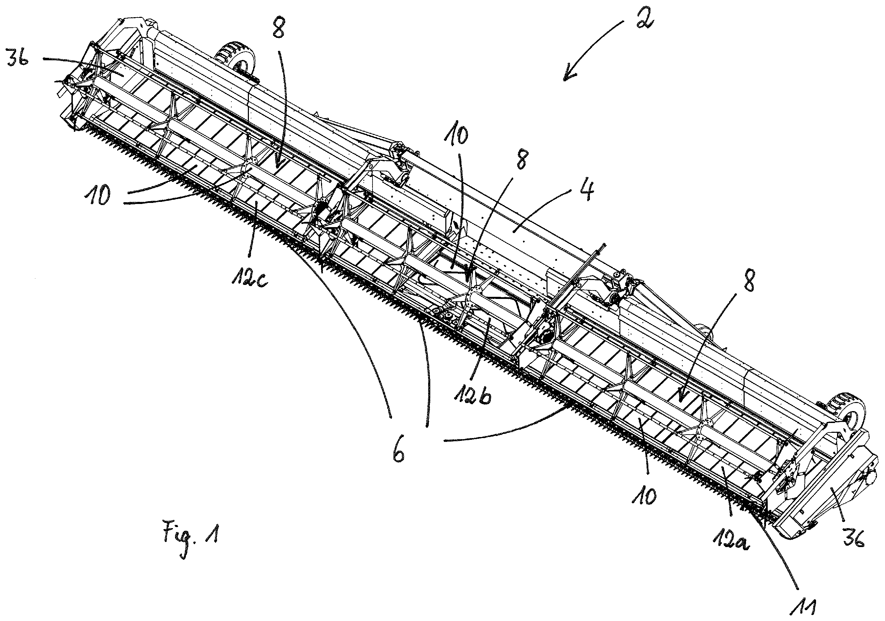

In Fig. 1 ist eine Ansicht auf ein Schneidwerk 2 aus einer Ansicht von schräg vorne gezeigt. Das Schneidwerk 2 ist mehrteilig mit einem Mittel- und zwei im Verhältnis dazu verschwenkbaren Seitenteilen ausgeführt und verfügt über einen Rahmen 4, mit dem der Messerbalken 6 verbunden ist. Das vom Messerbalken 6 geschnittene Erntegut wird auf der Ablagefläche 8 abgelegt und von dort mittels einer oder mehrerer Fördervorrichtungen 10 abgefördert. Das Schneidwerk 2 verfügt über ein Doppelmesser-Schnittsystem 11.

Im Ausführungsbeispiel befindet sich die Ablagefläche 8 auf insgesamt drei Bandförderern 12a, 12b, 12c, von denen die beiden seitlichen Bandförderer 12a, 12c bei der Erntearbeit das geschnittene und auf ihnen abgelegte Erntegut von außen nach innen auf den mittleren Bandförderer 12b befördern und dieser das darauf abgelegte Erntegut nach hinten in Richtung des Schrägförderers eines mit dem Schneidwerk 2 verbundenen Mähdreschers abfördert. Die Bandförderer 12 bilden durch ihre Funktionsweise nicht nur die Ablagefläche 8 aus, sondern sind gleichzeitig auch Fördervorrichtungen 10. Ein Beispiel für eine weitere Fördervorrichtung 10 stellt die Haspel dar, die rotierend antreibbar über und oberhalb des Messerbalkens 6 angeordnet ist. Sie taucht mit den Haspelzinken bei der Erntearbeit in den Bestand des zu erntenden Getreides ein und bewegt das geschnittene Getreide in die Richtung der Ablagefläche 8. Das Schneidwerk 2 verfügt über eine Antriebsvorrichtung, mit der eine Antriebskraft auf das Doppelmesser-Schnittsystem 11 mit dem Obermesser 22 und dem Untermesser 24 und die Fördervorrichtungen 10 übertragen wird. An den seitlichen Enden des Schneidwerks 2 befinden sich die Seitenwände 36, die gleichzeitig die Arbeitsbreite des Schneidwerks 2 bestimmen.

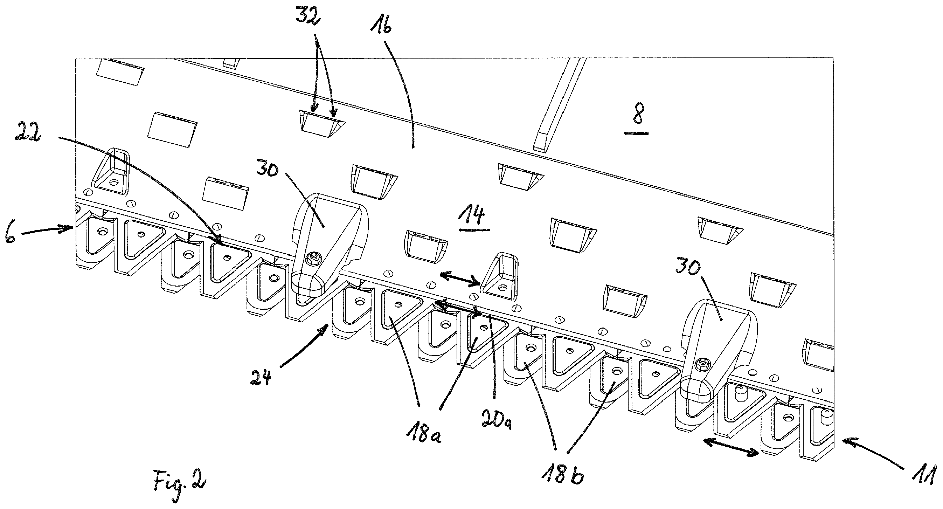

Die Fig. 2 zeigt eine vergrößerte Ausschnittansicht auf das Doppelmesser-Schnittsystem 11, das im Bereich des Messerbalkens 6 angeordnet ist. Bei dem Doppelmesser-Schnittsystem 11 sind ein erster Teil der am Schneidwerk 2 vorhandenen Messerklingen 18a an einem ersten Messerrücken 20a befestigt, wobei dieser erste Teil der Messerklingen 18a zusammen mit dem ersten Messerrücken 20a das Obermesser 22 bilden, und ein zweiter Teil der am Schneidwerk 2 vorhandenen Messerklingen 18b sind an einem zweiten Messerrücken 20b befestigt, wobei dieser zweite Teil der Messerklingen 18b zusammen mit dem zweiten Messerrücken 20b das Untermesser 24 bilden. Das Obermesser 22 und das Untermesser 24 sind gegenläufig angetrieben, so dass sich im Bereich der aufeinander zu bewegten Schnittkanten der Messerklingen 18a, 18b eine Art scherenartiger Schnitt ergibt, mit dem die Halme des Ernteguts abgeschnitten werden.

Im Übergangsbereich vom Doppelmesser-Schnittsystem 11 zur Ablagefläche 8 ist an dem Schneidwerk 2 eine Gleitfläche 14 ausgebildet. Die Gleitfläche 14 führt das Erntegut über den Höhen- und/oder Längenversatz zwischen den Ober- und Untermessern 22, 24 und der Ablagefläche 8. Die Gleitfläche 16 ist als Leiste 16 ausgebildet, die ortsfest mit dem Obermesser 22 verbunden ist. Wenn sich das Obermesser 22 hin und her bewegt, ist die Leiste 16 und damit auch die Gleitfläche 14 entsprechend in Bewegung.

Die Leiste 16 weist quer über die Arbeitsbreite des Schneidwerks 2 verteilt eine Anzahl von Luftaustrittsöffnungen 32 auf, die nach oben und/oder in Richtung der Ablagefläche 8 ausgerichtet sind. Aus den Luftaustrittsöffnungen 32 austretende Luft kann im Bereich der Gleitfläche 14 herabfallendes Erntegut erfassen und in Richtung der Ablagefläche 8 blasen, so dass dieses Erntegut nicht vor dem Messerbalken 6 auf den Ackerboden fällt und verloren geht.

Die Leiste 16 kann außerdem noch in den Bereichen, in denen sich Schwinghebel 34, 40 befinden, jeweils ausgeformte Abdeckungen 30 aufweisen, die die Schwinghebel 34, 40 gegen Erntegut und Schmutz abschirmen. Die Abdeckungen 30 können einteilig eingeformt in der Leiste 16 ausgebildet sein, wodurch die Montage vereinfacht und Fugen und Kanten vermieden werden, an denen sich Erntegut einklemmen und zu Materialpaketen aufbauen könnte.

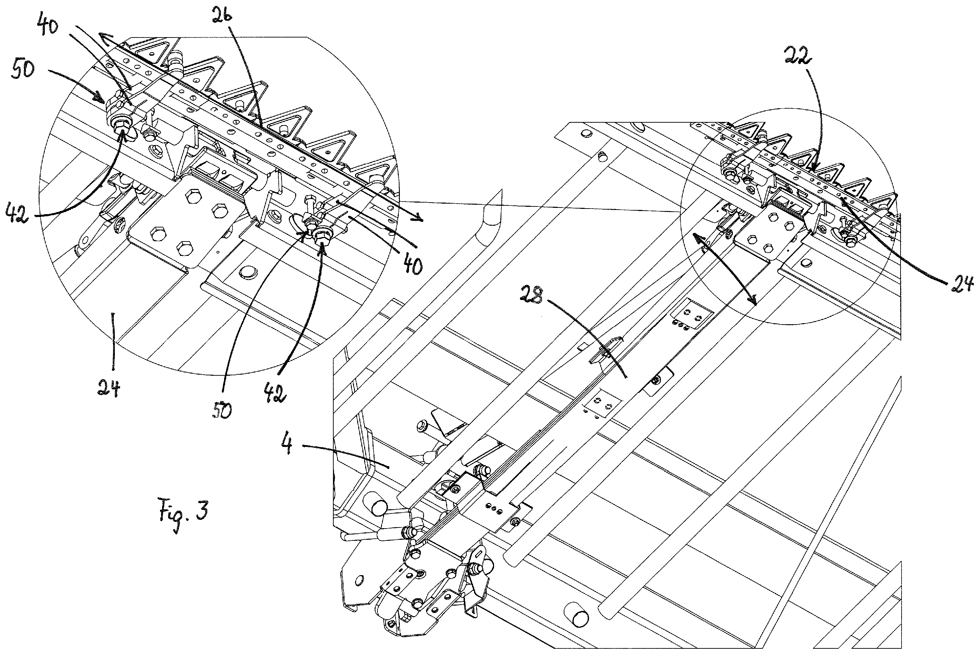

In Fig. 3 ist gezeigt, dass die Ober- und Untermesser 22, 24 über ihre Länge in Erstreckungsrichtung 26 hinweg an freien Enden von mehreren mit dem Rahmen 4 verbundenen Haltearmen 28 gehalten sind, die mit ihren freien Enden in voneinander unterschiedliche Höhenlagen beweglich sind. In der Fig. 3 ist beispielhaft einer der Haltearme 28 gezeigt, der im Ausführungsbeispiel als eine Blattfeder ausgeführt ist. Die Beweglichkeit des Haltearms 28 ist durch einen entsprechenden Doppelpfeil im Bereich von dessen freien Ende angedeutet. Durch die höhenbewegliche Halterung der Ober- und Untermesser 22, 24 können sich diese bei der Erntearbeit der Erntemaschine flexibel an eine unebene Bodenkontur anpassen. Fig. 3 zeigt auch, dass die das Obermesser 22 haltende und das Untermesser 24 haltende Schwinghebel 40 mit ihren jeweiligen schneidwerksseitigen Drehachsen 42 konzentrisch zueinander auf einer Lagerstelle 50 angeordnet sind.

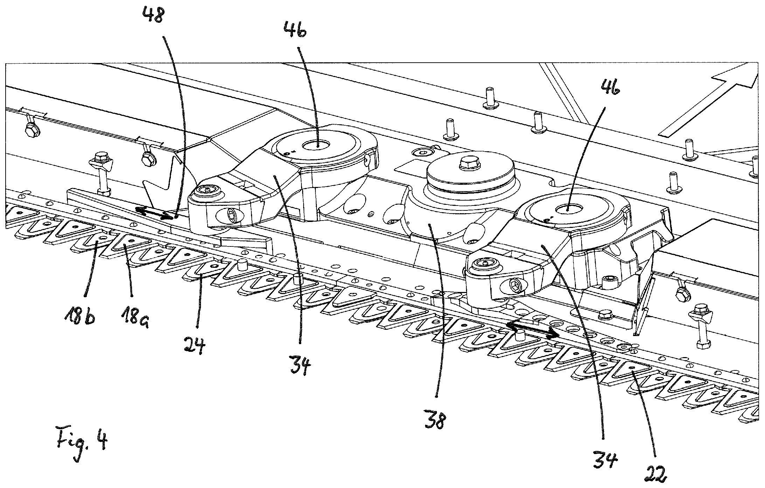

Die Fig. 4 zeigt eine vergrößerte Ansicht auf den Bereich des Messerbalkens 6, in dem ein Getriebe 38 angeordnet ist. Das Getriebe 38 ist im Schneidwerk 2 an einer Stelle zwischen den Seitenwänden 36 des Schneidwerks 2 angeordnet, bei nur einem Getriebe 38 im Schneidwerk 2 bevorzugt zumindest annähernd mittig zwischen den Seitenwänden 34. In dem Getriebe 38 wird eine von einer Antriebswelle in das Getriebe 38 eingebrachte rotierende Antriebsdrehzahl übersetzt in eine oszillierende Hin- und Herbewegung der Schwinghebel 34, mit denen das Obermesser 22 und das Untermesser 24 des Doppelmesser-Schnittsystems 11 antriebsverbunden sind. In Fig. 4 ist erkennbar, dass die Abtriebswellen 46 zum Antrieb der Schwinghebel 34 auf der Oberseite des Getriebes 38 aus dem Getriebegehäuse nach außen geführt sind. Dort sind sie mit den Schwinghebeln 34 verbunden, die sich aus einer Ebene oberhalb der Ebene der Ober- und Untermesser 22, 24 von den Abtriebswellen 46 in die Richtung der Ober- und Untermesser 22, 24 erstrecken. Die Schwinghebel 34 schieben die Ober- und Untermesser 22, 24 hin und her, wodurch die Messerklingen 18a, 18b Erntegut schneiden, das sich zwischen den Messerklingen 18a, 18b befindet. Mit nur einem Getriebe 38 können auf diese Weise beide Messer 22, 24 oszillierend angetrieben werden. Die Balance des Schneidwerks 2 um seine Längsmittelachse bleibt durch die zumindest annähernd mittige Anordnung des Getriebes 38 voll erhalten. Zudem sind die seitlichen Ränder des Schneidwerks 2 von dem Gewicht des Getriebes 38 und dem zugehörigen Antriebsstrang zum Getriebe 38 entlastet, was sich insbesondere bei größeren Arbeitsbreiten des Schneidwerks 2 von mehr als 8m deutlich entlastend auf die Gesamtkonstruktion auswirkt, weil dadurch auch der Rahmen 4 leichter ausgeführt werden kann. Die Fig. 4 zeigt auch, dass der Antriebsstrang von der Abtriebswelle 46 zum Untermesser 24 einen Abschnitt 48 aufweist, in dem der Schwinghebel 46 das Obermesser 22 bereichsweise umgreift.

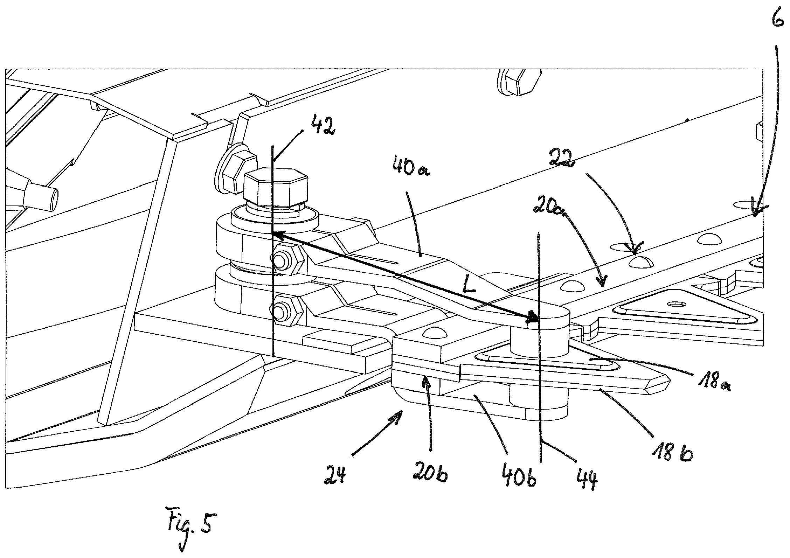

Die Fig. 5 zeigt eine Schnittansicht durch den Bereich des Messerbalkens 6. Das Obermesser 22 und das Untermesser 24 sind dort an Schwinghebeln 40 gehalten, die zwischen ihrer schneidwerksseitigen Drehachse 42 und der Drehachse 44, über die sie mit dem Obermesser 22 oder dem Untermesser 24 verbunden sind, dieselbe Länge L aufweisen wie die Schwinghebel 34, über die das Obermesser 22 und das Untermesser 24 mit dem Getriebe 38 verbunden sind. Die das Obermesser 22 und das Untermesser 24 haltenden Schwinghebel 40a, 40b sind mit ihren jeweiligen schneidwerksseitigen Drehachsen 42 konzentrisch zueinander angeordnet.

Die Erfindung ist nicht auf das vorstehende Ausführungsbeispiel beschränkt. Dem Fachmann bereitet es keine Schwierigkeiten, das Ausführungsbeispiel auf eine ihm geeignet erscheinende Weise abzuwandeln, um sie an einen konkreten Anwendungsfall anzupassen.

### Bezugszeichenliste

- 2: Schneidwerk
- 4: Rahmen
- 6: Messerbalken
- 8: Ablagefläche
- 10: Fördervorrichtung
- 11: Doppelmesser-Schnittsystem
- 12: Bandförderer
- 14: Gleitfläche
- 16: Leiste
- 18: Messerklinge
- 20: Messerrücken
- 22: Obermesser
- 24: Untermesser
- 26: Erstreckungsrichtung
- 28: Haltearm
- 30: Abdeckung
- 32: Luftaustrittsöffnung
- 34: Schwinghebel (Getriebe)
- 36: Seitenwand
- 38: Getriebe
- 40: Schwinghebel (Halterung)
- 42: schneidwerksseitigen Drehachse
- 44: messerseitige Drehachse
- 46: Abtriebswelle
- 48: Abschnitt
- 50: Lagerstelle

## Patentansprüche

1. Schneidwerk (2) zum Anbau an einen Mähdrescher mit einem Rahmen (4), einem Messerbalken (6), an dem ein Schnittsystem angeordnet ist, einer Ablagefläche (8) zur Ablage des geschnittenen Halmguts, Fördervorrichtungen (10) zum Abfördern des geschnittenen Halmguts, Antriebsvorrichtungen zum Antrieb des Schnittsystems mit einem Getriebe (38), das an einer Stelle zwischen den Seitenwänden (36) des Schneidwerks (2) angeordnet ist, wobei das Getriebe (38) die Antriebskraft über Abtriebswellen (46), die auf der Oberseite des Getriebes (38) aus dem Getriebegehäuse nach außen geführt sind, auf drehfest mit den Abtriebswellen (46) verbundene Schwinghebel (34) überträgt, die mit Hubstangen antriebsverbunden sind, die als Teil des Schnittsystems über die Schwinghebel (34) in oszillierenden Bewegungen angetrieben sind, **dadurch gekennzeichnet, dass** am Messerbalken (6) als Schnittsystem ein Doppelmesser-Schnittsystem (11) ausgebildet ist, bei dem ein erster Teil der am Schneidwerk (2) vorhandenen Messerklingen (18a) an einem ersten Messerrücken (20a) befestigt sind, wobei dieser erste Teil der Messerklingen (18a) zusammen mit dem ersten Messerrücken (20a) das Obermesser (22) bilden, ein zweiter Teil der am Schneidwerk (2) vorhandenen Messerklingen (18b) an einem zweiten Messerrücken (20b) befestigt sind, wobei dieser zweite Teil der Messerklingen (18b) zusammen mit dem zweiten Messerrücken (20b) das Untermesser (24) bilden, das Obermesser (22) und das Untermesser (24) gegenläufig angetrieben sind und von den Schwinghebeln (34) ein erster Schwinghebel (34) mit dem Obermesser (22) und ein zweiter Schwinghebel (34) mit dem Untermesser (24) antriebsverbunden sind.

2. Schneidwerk (2) nach Anspruch 1, **dadurch gekennzeichnet, dass** sich die Schwinghebel (34) in einer Ebene oberhalb der Ebene der Ober- und Untermesser (22, 24) von den Abtriebswellen (46) in die Richtung der Ober- und Untermesser (22, 24) erstrecken.

3. Schneidwerk (2) nach Anspruch 1 oder 2, **dadurch gekennzeichnet, dass** der Antriebsstrang von der Abtriebswelle (46) zum Untermesser (24) einen Abschnitt (48) aufweist, in dem der Schwinghebel (46) das Obermesser (22) bereichsweise umgreift.

4. Schneidwerk (2) nach einem der vorhergehenden Ansprüche, **dadurch gekennzeichnet, dass** das Obermesser (22) und das Untermesser (24) an Schwinghebeln (40) gehalten sind, die zwischen ihrer schneidwerksseitigen Drehachse (42) und der Drehachse (44), über die sie mit dem Obermesser (22) oder dem Untermesser (24) verbunden sind, dieselbe Länge aufweisen wie die Schwinghebel (34), über die das Obermesser (22) und das Untermesser (24) mit dem Getriebe (38) verbunden sind.

5. Schneidwerk (2) nach einem der vorhergehenden Ansprüche, **dadurch gekennzeichnet, dass** das Obermesser (22) haltende und das Untermesser (24) haltende Schwinghebel (40) mit ihren jeweiligen schneidwerksseitigen Drehachsen (42) konzentrisch zueinander auf einer Lagerstelle (50) angeordnet sind.

6. Schneidwerk (2) nach einem der vorhergehenden Ansprüche, **dadurch gekennzeichnet, dass** die Schwinghebel (46) an ihren rahmen- und/oder messerseitigen Ende ein Rückstellkräfte aufbauendes Pufferelement aufweisen.

7. Schneidwerk (2) nach einem der vorhergehenden Ansprüche, **dadurch gekennzeichnet, dass** die Messerklingen (18a, 18b) mit einer unterschiedlichen Klingenteilung am Ober- und Untermesser (22, 24) angeordnet sind.

8. Schneidwerk (2) nach einem der vorhergehenden Ansprüche, **dadurch gekennzeichnet, dass** das Schneidwerk (2) eine schräg in Förderrichtung des Ernteguts geneigte Gleitfläche (14) im Übergangsbereich vom Messerbalken (6) zur Ablagefläche (8) aufweist, wobei die Gleitfläche (14) als Leiste (16) ausgebildet ist, die ortsfest mit dem Obermesser (22) verbunden ist.

9. Schneidwerk (2) nach Anspruch 8, **dadurch gekennzeichnet, dass** die Leiste (16) quer über die Arbeitsbreite verteilt eine Anzahl von Luftaustrittsöffnungen (32) aufweist, die nach oben und/oder in Richtung der Ablagefläche (8) ausgerichtet sind.

10. Schneidwerk (2) nach einem der Ansprüche 8 oder 9, **dadurch gekennzeichnet, dass** in der Leiste (16) in den Bereichen, in denen sich Schwinghebel (34, 40) befinden, jeweils Abdeckungen (30) ausgeformt sind, die die Schwinghebel (34, 40) gegen Erntegut und Schmutz abschirmen.

11. Schneidwerk (2) nach einem der Ansprüche 8 bis 10, **dadurch gekennzeichnet, dass** das Schneidwerk (2) mehrteilig und die Leiste (16) an den Nahtstellen zwischen den Schneidwerksteilen flexibel und/oder geteilt ausgebildet ist.

12. Schneidwerk (2) nach einem der vorhergehenden Ansprüche, **dadurch gekennzeichnet**, die Ober- und Untermesser (22, 24) über ihre Länge in Erstreckungsrichtung (26) hinweg an den freien Enden von mehreren mit dem Rahmen (4) verbundenen Haltearmen (28) gehalten sind, die mit ihren freien Enden in voneinander unterschiedliche Höhenlagen beweglich sind.

13. Schneidwerk (2) nach einem der vorhergehenden Ansprüche, **dadurch gekennzeichnet, dass** die Ablagefläche (8) auf der nach oben weisenden Seite eines oder mehrerer umlaufend angetriebenen Bandförderer (12) ausgebildet ist.

## Claims

1. Cutterbar (2) for mounting to a combine harvester with a frame (4), a knife bar (6) on which a cutting system is arranged, a discharge area (8) for discharging the cut stalks, conveyor devices (10) for conveying the cut stalks, drive devices for driving the cutting system with a gear (38) which is arranged at a location between the side walls (36) of the cutterbar (2), wherein the gear (38) transmits the driving force via output shafts (46) which are guided outwards from the gear housing on the upper side of the gear (38) to rocker arms (34) which are connected in a rotationally fixed manner to the output shafts (46) and which rocker arms (34) are connected to drive rods which are driven in oscillating movements as part of the cutting system via the rocker arms (34), **characterized in that** a double-blade cutting system (11) is formed on the knife bar (6) as a cutting system, in which a first part of the knife blades (18a) present on the cutterbar (2) are fastened to a first knife back (20a), wherein this first part of the knife blades (18a) together with the first knife back (20a) form the upper knife (22), a second part of the knife blades (18b) present on the cutterbar (2) are fastened to a second knife back (20b), wherein this second part of the knife blades (18b) together with the second knife back (20b) form the lower knife (24), the upper knife (22) and the lower knife (24) are driven in opposite directions, and of the rocker arms (34), a first rocker arm (34) is connected to the upper knife (22) and a second rocker arm (34) is connected to the lower knife (24) for drive purposes.

2. Cutterbar (2) according to claim 1, **characterized in that** the rocker arms (34) extend in a plane above the plane of the upper and lower knives (22, 24) from the output shafts (46) in the direction of the upper and lower knives (22, 24).

3. Cutterbar (2) according to claim 1 or 2, **characterized in that** the drive train from the output shaft (46) to the lower knife (24) has a section (48) in which the rocker arm (46) partially engages the upper knife (22).

4. Cutterbar (2) according to one of the preceding claims, **characterized in that** the upper knife (22) and the lower knife (24) are held on rocker arms (40) which, between their cutterbar-side rotation axis (42) and the rotation axis (44) via which they are connected to the upper knife (22) or the lower knife (24), have the same length as the rocker arms (34) via which the upper knife (22) and the lower knife (24) are connected to the gear (38).

5. Cutterbar (2) according to one of the preceding claims, **characterized in that** the rocker arms (40) holding the upper knife (22) and the lower knife (24) are arranged concentrically to each other with their respective cutterbar-side rotation axes (42) on a bearing point (50).

6. Cutterbar (2) according to one of the preceding claims, **characterized in that** the rocker arms (46) have a buffer element at their frame-side and/or knife-side end which builds up restoring forces.

7. Cutterbar (2) according to one of the preceding claims, **characterized in that** the knife blades (18a, 18b) are arranged with a different blade pitch on the upper and lower knives (22, 24).

8. Cutterbar (2) according to one of the preceding claims, **characterized in that** the cutterbar (2) has a sliding surface (14) inclined at an angle in the conveying direction of the crop in the transition area from the knife bar (6) to the discharge area (8), wherein the sliding surface (14) is designed as a strip (16) which is fixedly connected to the upper knife (22).

9. Cutterbar (2) according to claim 8, **characterized in that** the strip (16) has a number of air outlet openings (32) distributed transversely across the working width, which outlet openings (32) are directed upwards and/or towards the discharge area (8).

10. Cutterbar (2) according to one of the claims 8 or 9, **characterized in that** respective covers (30) are formed in the strip (16) in the areas where rocker arms (34, 40) are located, which covers (30) shield the rocker arms (34, 40) from crop and dirt.

11. Cutterbar (2) according to one of claims 8 to 10, **characterized in that** the cutterbar (2) is multi-part and the strip (16) is designed to be flexible and/or divided at the joints between the cutterbar parts.

12. Cutterbar (2) according to one of the preceding claims, **characterized in that** the upper and lower knives (22, 24) are held along their length in the extension direction (26) at the free ends of a plurality of retaining arms (28) connected to the frame (4) and can be moved with their free ends to different height positions from one another.

13. Cutterbar (2) according to one of the preceding claims, **characterized in that** the discharge area (8) is formed on the upwards-facing side of one or more circumferentially driven belt conveyors (12).

## Revendications

1. Mécanisme tranchant (2) destiné à être monté sur une moissonneuse-batteuse avec un châssis (4), une barre porte-couteaux (6), sur laquelle est disposé un système de coupe, une surface de dépôt (8) pour déposer la paille découpée, des dispositifs de convoyage (10) destinés à évacuer la paille coupée, des dispositifs d'entraînement destinés à entraîner le système de coupe avec une transmission (38), qui est disposée sur un emplacement entre les parois latérales (36) du mécanisme tranchant (2), la transmission (38) transmettant la force d'entraînement par des arbres de sortie (46), qui sont guidés depuis le boîtier de transmission vers l'extérieur sur le côté supérieur de la transmission (38), sur des leviers oscillants (34) reliés de manière solidaire en rotation aux arbres de sortie (46), qui sont reliés en entraînement à des tiges de levage qui, en tant que partie du système de coupe, sont entraînées en des mouvements oscillants par les leviers oscillants (34), **caractérisé en ce qu'**est réalisé, sur la barre porte-couteaux (6), en tant que système de coupe, un système de coupe à double couteau (11), dans lequel une première partie des lames (18a) de couteau présentes sur le mécanisme tranchant (2) sont fixées sur un premier dos (20a) de couteau, ladite première partie des lames (18a) de couteau formant conjointement avec le premier dos (20a) de couteau le couteau supérieur (22), une seconde partie des lames (18b) de couteau présentes sur le mécanisme tranchant (2) sont fixées sur un deuxième dos (20b) de couteau, ladite seconde partie des lames (18b) de couteau formant conjointement avec le deuxième dos (20b) de couteau le couteau inférieur (24), le couteau supérieur (22) et le couteau inférieur (24) étant entraînés en sens inverse et un premier levier oscillant (34) avec le couteau supérieur (22) et un deuxième levier oscillant (34) avec le couteau inférieur (24) étant reliés en entraînement par les leviers oscillants (34).

2. Mécanisme tranchant (2) selon la revendication 1, **caractérisé en ce que** les leviers oscillants (34) s'étendent dans un plan au-dessus du plan des couteaux supérieur et inférieur (22, 24) depuis les arbres de sortie (46) dans la direction des couteaux supérieur et inférieur (22, 24).

3. Mécanisme tranchant (2) selon la revendication 1 ou 2, **caractérisé en ce que** la chaîne cinématique allant de l'arbre de sortie (46) au couteau inférieur (24) comporte une section (48), dans laquelle le levier oscillant (46) entoure par endroits le couteau supérieur (22).

4. Mécanisme tranchant (2) selon l'une des revendications précédentes, **caractérisé en ce que** le couteau supérieur (22) et le couteau inférieur (24) sont maintenus sur des leviers oscillants (40), qui présentent, entre leur axe de rotation côté mécanisme tranchant (42) et l'axe de rotation (44), par lequel ils sont reliés au couteau supérieur (22) ou au couteau inférieur (24), la même longueur que les leviers oscillants (34), par lesquels le couteau supérieur (22) et le couteau inférieur (24) sont reliés à la transmission (38).

5. Mécanisme tranchant (2) selon l'une des revendications précédentes, **caractérisé en ce que** des leviers oscillants (40) maintenant le couteau supérieur (22) et maintenant le couteau inférieur (24) sont disposés par leurs axes de rotation côté mécanisme tranchant (42) respectifs de manière concentrique les uns par rapport aux autres sur un emplacement de montage (50).

6. Mécanisme tranchant (2) selon l'une des revendications précédentes, **caractérisé en ce que** les leviers oscillants (46) comportent sur leur extrémité côté châssis et/ou côté couteau, un élément tampon mettant en place des forces de rappel.

7. Mécanisme tranchant (2) selon l'une des revendications précédentes, **caractérisé en ce que** les lames (18a, 18b) de couteau sont disposées sur le couteau supérieur et inférieur (22, 24) avec une répartition de lames différente.

8. Mécanisme tranchant (2) selon l'une des revendications précédentes, **caractérisé en ce que** le mécanisme tranchant (2) comporte une surface de glissement (14) inclinée à l'oblique par rapport à la direction de convoyage des produits récoltés dans la zone de transition depuis la poutre porte-couteaux (6) à la surface de dépôt (8), la surface de glissement (14) étant réalisée comme une baguette (16) qui est reliée de manière stationnaire au couteau supérieur (22).

9. Mécanisme tranchant (2) selon la revendication 8, **caractérisé en ce que** la baguette (16) comporte selon une répartition transversalement sur la largeur de travail un nombre d'ouvertures de sortie d'air (32), qui sont orientées vers le haut et/ou en direction de la surface de dépôt (8).

10. Mécanisme tranchant (2) selon l'une des revendications 8 ou 9, **caractérisé en ce que** sont formés dans la baguette (16) dans les zones, dans lesquelles se trouvent des leviers oscillants (34, 40), respectivement des recouvrements (30), qui protègent les leviers oscillants (34, 40) des produits récoltés et des saletés.

11. Mécanisme tranchant (2) selon l'une des revendications 8 à 10, **caractérisé en ce que** le mécanisme tranchant (2) est réalisé en plusieurs parties et la baguette (16) est réalisée de manière flexible et/ou divisée sur les jointures entre les parties de mécanisme tranchant.

12. Mécanisme tranchant (2) selon l'une des revendications précédentes, **caractérisé en ce que** les couteaux supérieur et inférieur (22, 24) sont maintenus sur les extrémités libres de plusieurs bras de maintien (28) reliés au châssis (4) au-delà de leur longueur dans la direction d'extension (26).

13. Mécanisme tranchant (2) selon l'une des revendications précédentes, **caractérisé en ce que** la surface de dépôt (8) est réalisée sur le côté pointant vers le haut d'un ou de plusieurs convoyeurs à bande (12) entraînés en rotation.
